# EUROPEAN PATENT SPECIFICATION

(11) **EP 2 239 092 B1**
(45) Date of publication and mention of the grant of the patent: **03.10.2012**
(21) Application number: 10159532.0
(22) Date of filing: 09.04.2010
(51) Int. Cl.: B23Q 7/10

(54) **Machine for handling sheet plates**
Vorrichtung zur Handhabung von Blechen
Dispositif pour la manutention de plaques

(30) Priority: 09.04.2009 IT BS20090069
(43) Date of publication of application: 13.10.2010
(73) Proprietor: SPR S.R.L., 26012 Castelleone (CR) (IT)
(72) Inventor: Mania, Ion Ilie, 26012 Castellone (IT)
(74) Representative: Tirloni, Bartolomeo

(56) References cited:
- WO-A-86/05422
- FR-A- 2 842 754
- US-B1- 6 413 035

## Description

The present invention relates to a machine for handling sheet plates, in particular for interlocking machines for working sheet plates, such as laser cutting machines, or for interlocking machines for conveying sheet plates, e.g. bench or trolley or roller or belt conveyors.

It is known about a machine for handling sheet plates, i.e. sheets of various materials, e.g. metal (typically) or plastic or glass, in various plan shapes (typically rectangular) and various plan size and various thicknesses, typically used for interlocking a laser cutting machine. This known machine for handling sheet plates is designed to receive at an inlet a plurality of sheet plate stacks (typically the sheet plates are homogeneous within the stack and can vary from stack to stack as far as material, thickness, plan size and/or shape are concerned), store the sheet plate stacks, release the sheet plate one by one from a selected stack, supply the released sheet plate at an exit, receive at the same exit a single machined (e.g. laser cut) sheet plate, take this machined plate and unload it, typically by piling it up with other machined sheet plates, into an unloading bay, from which the machined sheet plates can be, if necessary, conveyed to the aforesaid inlet for their removal.

This machine includes a vertical tower having in its upper part a sheet plate store comprising a plurality of storing or stocking bays piled up vertically at different levels. The lower part of the tower is occupied at two different levels by a release bay for the sheet plates and an unloading bay, vertically piled up with the storing bays. A feeding or inlet bay and an exit area lie approximately at the base of the tower, arranged beside it and on opposite sides. Each one of the aforesaid bays is apt to house a pallet or platform, made of metal, which is apt to support a stack of sheet plates. On the exit area there is at least one machining bench for the single sheet plate being part of the laser cutting machine, this machining bench being provided with a plurality of parallel blades defining a resting base. The handling machine further comprises an elevator vertically movable along basically a whole side of the tower and above the feeding bay. The elevator is provided with a handling system for a single pallet apt to temporarily support the pallet (by means of two series of rollers arranged along two horizontal and opposed arms, respectively) and to drive the pallet (by means of a pair of chains arranged on the two arms, respectively, and provided each with a catch engaging with a dedicated pallet hook) into/out of a bay selected among the storing, release and unloading bays, respectively. The elevator can convey a single pallet, the latter being either empty or full of sheet plates, selectively from any one of the feeding, storing, release and unloading bays to any one of said bays.

The handling machine further comprises, on the opposite side of the tower with respect to the elevator and above the exit area, a gripper vertically movable along the lower part only of the respective side of the tower (on the levels occupied by the release and unloading bays and by the exit area). The gripper is provided with a vacuum pad system which can horizontally move with respect to the tower for getting into the upper part of the release bay for taking a sheet plate at a time, thus releasing - by slightly lifting the gripper - the stack of sheet plates lying in the aforesaid bay, driving the released bay out of the tower space and, once the gripper has reached the level of the exit area, laying the sheet plate onto the machining bench lying there. The gripper is further provided with a comb horizontally movable with respect to the vacuum pad system between a position projecting beyond the vacuum pad system and a position on this system. This comb, starting from a position outside the space occupied by the exit area (with the vacuum pad system above this area), can move with respect to the vacuum pads and get under the machined sheet plate interleaving with the aforesaid blades of the machining bench and, by lifting the gripper, remove the machine sheet plate from the machining bench. Once the gripper has been lifted up to the level of the unloading bay, the assembly made up of the vacuum pad system, the comb and the machined sheet plate stiffly shifts in horizontal direction so as to get into the upper part of the unloading bay and, by shifting back the comb only, unload here the machined sheet plate thanks to a counter-comb, which is integral with the vacuum pad system and interleaved with the comb.

The Applicant has found out that the known machine for handling sheet plates and the aforesaid method for handling sheet plates have some drawbacks. Among these, the aforesaid machine has the drawback of a high overall size in horizontal plan, due both to the simultaneous presence on the two opposite sides of the tower of the elevator and of the gripper, and to the gripper configuration, which requires in some steps the comb to project beyond the vacuum pad system when the latter is already beyond the space occupied by the tower. The aforesaid machine is besides complex in its structure and/or expensive or complex as far as manufacturing and/or installation and/or maintenance and/or operation are concerned.

It is also known about a machine for handling sheet plates, in which the exit area lies inside the space occupied by the tower, piled up with the storing and release bays, below the latter. Instead of being placed - as described above - on the gripper, the vacuum pad system is positioned in the upper part of the release bay so as to be horizontal. Therefore, the gripper is provided with a horizontally movable comb only. During operation, the vacuum pad system, with a vertical movement, releases a single sheet plate from the stack of sheet plates in the release bay. Now the gripper comb gets below the released sheet plate and receives from the vacuum pads said sheet plate. Then the comb gets back outside the space occupied by the tower and once the gripper gets down to the level of the exit area, the comb gets again into the space occupied by the tower above the machining bench. By lowering the gripper, the comb interleaves with the aforesaid blades of the machining bench, which blades support the sheet plate by releasing the comb, which can in its turn get back from the space occupied by the bench.

The Applicant thinks that also the latter known machine for handling sheet plates and the related method for handling sheet plates have some drawbacks. Among these, the aforesaid machine still has an overall size in horizontal plan which, though smaller than the above machine, is still quite high, due to the simultaneous presence on the two opposite sides of the tower of the elevator and the gripper. The aforesaid machine is further complex in its structure and/or expensive or complex as far as manufacturing and/or installation and/or maintenance and/or operation are concerned.

Document WO 86/05422 discloses a machine as in the preamble of claim 1.

Under these circumstances, the technical task underlying the present invention is to propose a machine for handling sheet plates and a related method for handling sheet plates, which also overcome one or more of the drawbacks of prior art as referred to above.

One of the aims of the present invention in one or more of its various aspects is to provide a machine for handling sheet plates which has a reduced overall size in horizontal plan and/or a compact structure. One of the aims of the present invention in one or more of its various aspects is to provide a machine for handling sheet plates with a simple structure and/or which is simple and/or cheap as far as manufacturing and/or storing and/or transport and/or installation and/or use and/or maintenance are concerned. One of the aims of the present invention in one or more of its various aspects is to provide a method for handling sheet plates which is simple and/or cheap and/or rapid as far as execution is concerned.

One or more of the technical tasks and/or of the aims referred to above are basically achieved by a machine for handling sheet plates and a related method for handling sheet plates as claimed in claims 1 and 9.

In one aspect, the invention relates to a machine for handling sheet plates comprising at least one storing bay for sheet plates arranged on a first level, a release bay arranged on a second level, an exit area arranged on a third level, wherein the storing bay, the release bay and the exit area are vertically piled up and wherein each of the aforesaid bays houses a pallet for sheet plates, and a lifting system comprising an (one) elevator movable vertically at least between the aforesaid first and second level and provided with a handling system for said pallet configured for driving the pallet out of and into the storing bay, respectively, temporarily supporting the pallet and driving the pallet into and out of the release bay, respectively.

In one aspect, the aforesaid elevator is movable vertically at least between the aforesaid second and third level and comprises a handling system for sheet plates configured for driving one sheet plate at a time out of the release bay, temporarily supporting said one sheet plate and driving it above the exit area.

In one aspect, the aforesaid handling systems for the pallet and for the sheet plate are both integrated into the aforesaid elevator.

The Applicant thinks that the aforesaid integration enables to advantageously simplify the structure of the machine and/or to substantially reduce the overall size thereof in plan, though allowing to store at least one stack of sheet plates on a pallet in the storing bay, to move it to the release bay, to release the sheet plates and to convey the released sheet plate to the exit area for the released sheet plate. As a matter of fact, the integration of the two aforesaid handling systems into one elevator enables to obtain the aforesaid functions by occupying one side of the machine only and leaving the other side empty. All the operations involving driving in/out and vertically conveying the pallet and involving driving in/out and vertically conveying the sheet plate are carried out by one side of the machine. The integration of the two aforesaid handling systems further allows to avoid the need for a second elevator (e.g. the gripper of prior art) different from the first one, together with its mechanisms for vertical movement (e.g. motor, drive shafts, belts and ropes, etc.). It should be pointed out that the aforesaid solution does not simply consist in an integration of the known handling systems for the pallet and the sheet plate, but also an integration of the related known lifting systems, comprising among other things motors, shafts, pulleys, drive belts or ropes, etc.

The Applicant deems as non-obvious having carried out one lifting system, with one elevator having integrated therein the aforesaid handling systems for the pallet and for the sheet plate, could it perform all of the functions of the machine for handling sheet plates according to the present invention in its various aspects, without slowing down or limiting work.

In one aspect, the aforesaid handling systems for the pallet and the sheet plate are distinct from one another.

In one aspect, the aforesaid handling systems for the pallet and the sheet plate are movable vertically in unison with one another and with the elevator.

In one aspect, the machine comprises a feeding bay arranged on a fourth level and configured for housing the pallet. Advantageously, the aforesaid elevator is vertically movable between the first and fourth level. Advantageously, the feeding bay is arranged under the aforesaid elevator (e.g. the main body of the elevator) in correspondence of a side of the machine. Advantageously, the feeding bay is arranged near the base of the machine. By way of example, the feeding bay comprises a plurality of vertical projections.

In one aspect, the machine comprises at least the aforesaid pallet, typically made of metal, having a resting plane for at least one sheet plate. By way of example, the pallet has a plurality of through openings with a distribution corresponding to the distribution of the aforesaid projections of the feeding bay, for enabling the introduction thereof into the openings.

In one aspect, the aforesaid elevator comprises a main body, including e.g. a pair of trolleys opposed to one another and mutually stiffly connected, e.g. by means of at least one cross-piece. Advantageously, each trolley slides along a vertical guide of the machine. Advantageously, the main body comprises a pair of arms opposed to one another and mutually parallel, each of them being integral with a respective trolley.

In one aspect, the aforesaid handling system for the pallet comprises at least one chain or belt, typically a pair of chains or belts, moved by a motor mounted onto the elevator, and provided with a suitable catch configured for getting engaged with a suitable hook of the pallet in order to drive the pallet out of and into the storing or release bay, respectively. Advantageously, the two chains are arranged on the two arms of the elevator, respectively.

In one aspect, the aforesaid handling system for the pallet comprises two opposed series of rollers aligned along the main body of the elevator (e.g. along the two arms of the elevator, respectively) for temporarily supporting the pallet on the elevator once it has been driven out of the respective bay.

In one aspect, the aforesaid handling system for a sheet plate comprises a set of vacuum pads movable horizontally with respect to the main body of the elevator. For instance, the aforesaid handling system for a sheet plate comprises a pair of moving arms which stiffly slide with respect to the main body of the elevator and onto which a frame supporting the set of vacuum pads is mounted. Advantageously, each of the aforesaid vacuum pads is associated to a system for creating vacuum. Optionally, at least one of the aforesaid vacuum pads is movable vertically, independently from the other vacuum pads, with respect to the main body of the elevator.

In one aspect, the aforesaid handling system for a sheet plate comprises a comb movable horizontally with respect to the main body of the elevator. The handling system for a sheet plate advantageously comprises a pair of moving arms which stiffly slide with respect to the main body of the elevator and onto which the comb is mounted. The comb typically comprises a plurality of prongs parallel to one another and mounted at one end thereof onto a cross-piece of the comb. Advantageously, the comb prongs are apt to interleave with the aforesaid projections of the feeding bay.

The aforesaid moving arms of the elevator can be advantageously provided each with a guide developing along the longitudinal development of the respective arm and engaging a respective shoe mounted onto the respective arm of the main body of the elevator. The aforesaid moving arms can be advantageously provided each with a rack typically developing parallel to the aforesaid guide, onto which is engaged a respective toothed wheel actuated by one motor, typically mounted onto the main body of the elevator.

In one aspect, the release bay is provided in its upper part with a release system for a single sheet plate which is horizontally stationary, e.g. comprising a set of vacuum pads. By way of example, the release system comprises a fixed frame and a moving frame onto which the set of vacuum pads is mounted. The moving frame is advantageously movable vertically with respect to the fixed frame for enabling the vacuum pads to rest onto the sheet plate to be released and the lifting thereof. Advantageously, each of the aforesaid vacuum pads is associated to a system for creating vacuum. Optionally, at least one of the aforesaid vacuum pads is movable vertically, independently from the other vacuum pads, for enabling the start of sheet plate release. In this aspect, preferably, the aforesaid handling system for a sheet plate comprises the aforesaid moving comb.

In one aspect, the machine comprises an unloading bay arranged on a fifth level and configured for housing the pallet. Advantageously, the unloading bay, the storing bay, the release bay and the exit area are vertically piled up one onto the other.

In one aspect, the unloading bay is provided with a counter-comb apt to interleave with the aforesaid comb of the elevator. Preferably, the counter-comb is movable between a first position in which it enables the insertion of the comb of the elevator loaded with a sheet plate into the unloading bay without interfering with the sheet plate itself, and a second position in which it interleaves with the comb when the latter is driven out of the unloading bay for contrasting the sheet plate and preventing it from following the comb getting back. Preferably, the counter-comb is movable between the first and second position by tilting or by vertical shift or by rotation or by roto-translation.

Typically, the machine comprises a tower comprising at least four vertical uprights arranged on the four corners of the tower, possibly joined by one or more cross-pieces and/or one or more tie rods. By way of example, the aforesaid guides of the trolleys of the elevator are associated to two uprights arranged on the same front side.

Advantageously, the lifting system comprises an actuating motor, typically mounted onto the tower, e.g. on the upper part thereof, for enabling the vertical movement of the elevator, e.g. by means of a system including drive shafts, pulleys and cables.

In one aspect, one or more of the aforesaid storing, release and unloading bays comprise a pair of horizontal cross-pieces opposed and parallel to one another, each provided with a series of rollers with horizontal axis of rotation, typically with ball bearings, and aligned horizontally for supporting the pallet and making it easier to drive into/out of the respective bay.

In one aspect, the machine comprises a plurality of storing or stocking bays, vertically piled up one onto the other, said plurality including the aforesaid at least one storing bay. The storing bays are preferably mutually identical.

In one aspect, the aforesaid first, second, third and fourth level are at different vertical heights. Preferably, also the fifth level is at a vertical height different from the other levels. Advantageously, the first level is at a higher vertical height than the second and/or third and/or fourth and/or fifth level. Advantageously, though not necessarily, the fifth level lies below the second level. Advantageously, the third level lies below the second level and/or fifth level.

In another aspect, the present invention relates to a system or assembly comprising the machine for handling sheet plates according to any one of the above aspects and a machine for working or conveying the sheet plate having a respective support for sheet plates (e.g. a machining or conveying bench or a conveyor belt or a trolley or a roller support) on the aforesaid exit area.

In one aspect, the aforesaid working machine is a laser cutting machine. Preferably the sheet plate support is a machining bench comprising a plurality of rectilinear blades parallel to one another and defining a resting plane for the sheet plate. Advantageously, the blades are configured for interleaving with the aforesaid prongs of the comb of the elevator.

In one aspect, the aforesaid sheet plate support is a conveyor belt.

In still another aspect, the present invention relates to a method for handling sheet plates comprising the performance, by the machine for handling sheet plates according to any one of the above aspects, of the following operations: positioning the elevator on the first level; the handling system for the pallet drives the pallet loaded with a stack of sheet plates out of the storing bay (e.g. it is conveyed out of the space occupied by the tower), temporarily supports it while the elevator moves vertically from the first to the second level and, once the second level is reached, drives the pallet into the release bay (e.g. it is conveyed into the space occupied by the tower); then the handling system for the sheet plate drives the upper sheet plate of the aforesaid stack out of the release bay (e.g. by conveying it out of the space occupied by the tower), temporarily supports the sheet plate while the elevator moves vertically from the second to the third level, and inserts the sheet plate over the exit area (e.g. by conveying it into the space occupied by the tower).

In one aspect, before driving the upper sheet plate out of the release bay, the vacuum pads of the handling system for the sheet plate are driven into the upper part of the release bay and are then lowered onto the sheet plate, vacuum is created so that the vacuum pads adhere to the sheet plate and then the sheet plate is driven out of the release bay by pulling the vacuum pads out of the release bay.

In one alternative aspect, before driving the upper sheet plate out of the release bay, the vacuum pads in the release bay are lowered onto the sheet plate; vacuum is created so that the vacuum pads adhere to the sheet plate; the vacuum pads are lifted; then the comb of the handling system for the sheet plate is driven into the release bay below the lifted sheet plate which is laid onto the comb, and then the sheet plate is driven out of the release bay by pulling the comb with the sheet plate out of the release bay (e.g. by conveying it out of the space occupied by the tower). In one aspect, after driving the sheet plate over the exit area, the elevator is lowered and the comb interleaves with the aforesaid blades of the machining bench, which support the sheet plate releasing the comb, which can in its turn get out of the exit area.

In one aspect, the elevator is lowered towards the bottom of the feeding bay with an empty pallet supported by the handling system for the pallet, the comb interleaving with the projections, until the pallet itself lies under the top of the projections, after that a stack of sheet plates is laid onto the top of the projections, then the elevator is lifted for lifting the pallet by means of the handling system for the pallet and take it to the first level; and then the pallet is driven into the storing bay.

In one aspect, the comb is inserted under a sheet plate (e.g. machined) lying in the exit area, it is lifted by means of a vertical movement of the elevator for taking the sheet plate, pulled out of the exit area (e.g. conveyed out of the space occupied by the tower), conveyed to the fifth level, driven into the unloading bay with the counter-comb in the first position, and pulled out of the unloading bay with the counter-comb in the second position, so that the sheet plate contrasts the counter-comb and remains in the unloading area releasing the comb.

Further characteristics and advantages of the present invention will appear better from the indicative, and therefore non-limiting, description of some preferred embodiments of a machine for handling plates, an assembly comprising the aforesaid machine and a machine for working or conveying the sheet plates, and a related method for handling sheet plates, according to the present invention, thanks to the accompanying drawings, in which:
- Figure 1 is a perspective view of an embodiment of the machine for handling sheet plates according to the present invention;
- Figure 2 is a perspective view of a portion of the machine of Figure 1, with some parts removed;

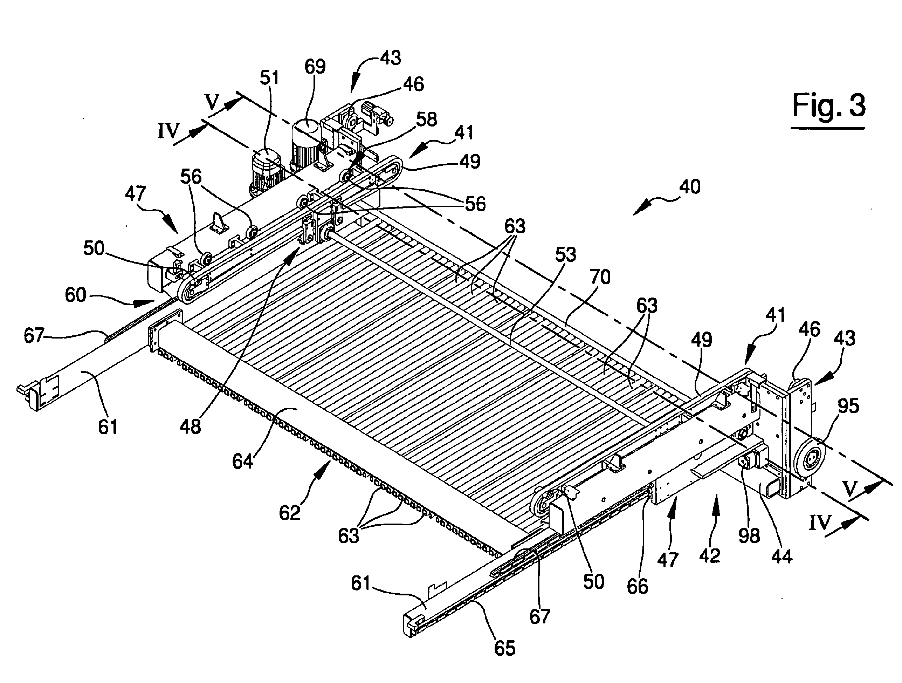

- Figure 3 is a perspective view of another portion of the machine of Figure 1;
- Figure 4 is a sectioned view along section line 4-4 of Figure 3;
- Figure 5 is a sectioned view along section line 5-5 of Figure 3;

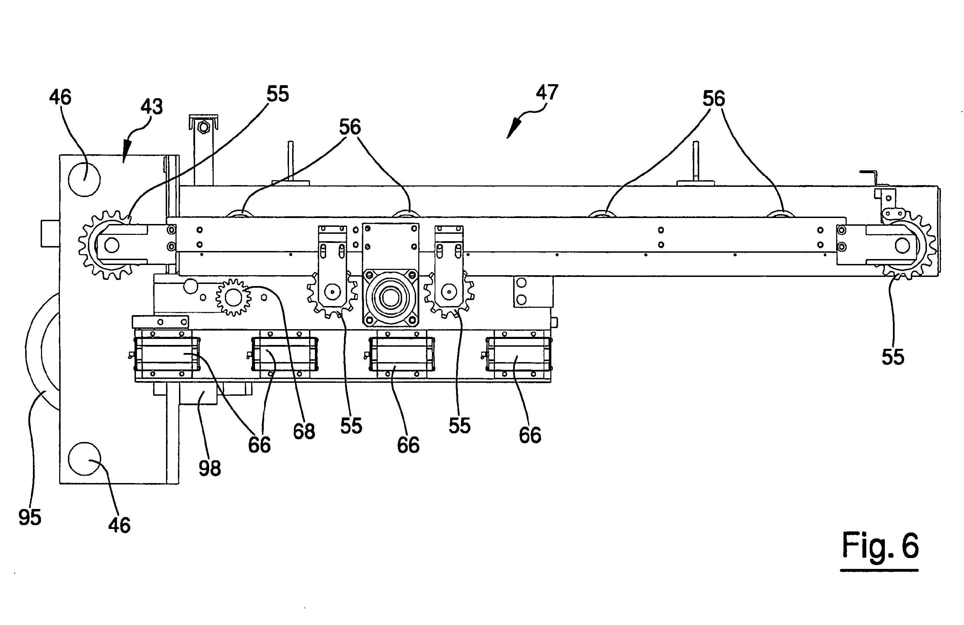

- Figure 6 is a side view of a detail of the portion of Figure 3, with some parts removed.

With reference to the accompanying figures, the numeral 1 globally refers to a machine for handling sheet plates according to the present invention. In the following the same numeral is used for the same elements.

The machine 1 for handling sheet plates comprises by way of example a tower 2 and a lifting system 3 associated to the tower.

Typically, the tower 2 comprises four vertical uprights 12 arranged on the four corners of the tower, possibly joined by one or more cross-pieces and/or one or more tie rods, shown in the figure.

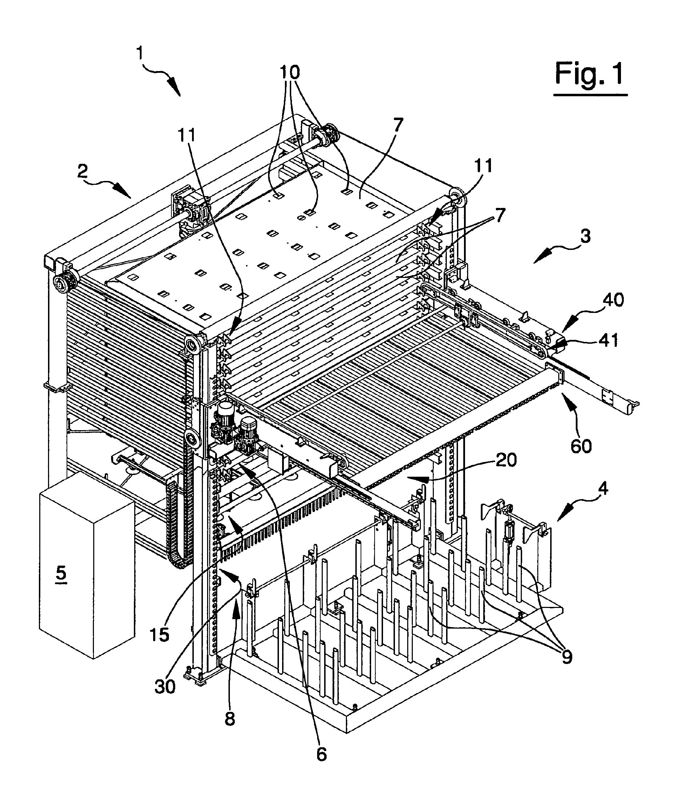

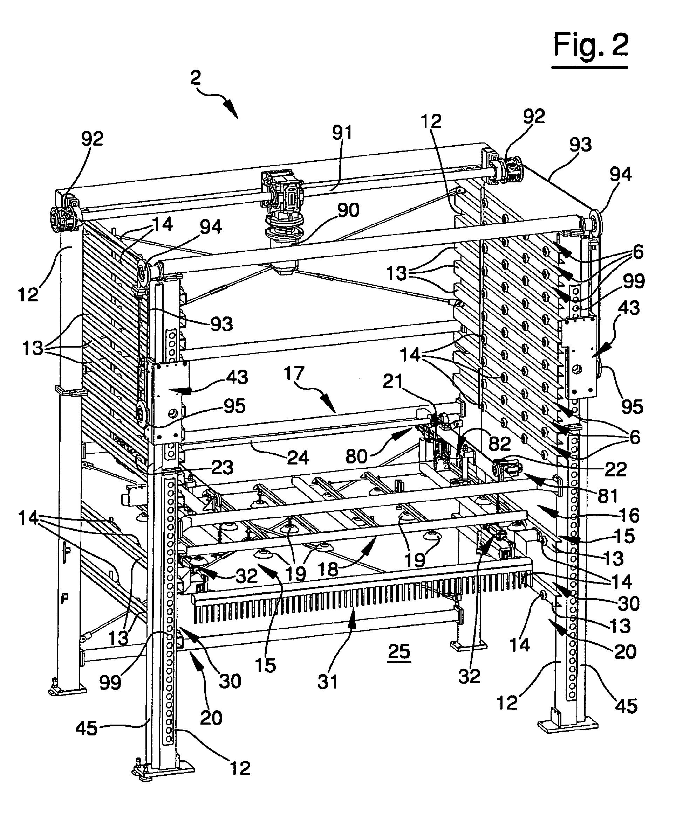

The machine 1 comprises by way of example ten storing or stocking bays 6, each configured for housing a single pallet 7 (shown in Figure 1 and not shown in Figure 2). Each pallet 7 is typically made of metal and has a resting plane for a stack of sheet plates (not shown). During use, the pallet 7 can be housed in the storing bay either empty or with the sheet plates. Each pallet optionally has a pair of hooks 11 longitudinally opposed, advantageously facing a front side 8 of the machine 1.

The ten storing bays 6 are vertically piled up in the upper part of the tower 2. Each of them advantageously occupies a vertical level. The present invention further encompasses the case in which the machine 1 comprises one storing bay 6 only, arranged on a first vertical level (e.g. the lower level among the vertical levels of the storing bays shown in the figure). This one bay can anyhow be used for stocking a stack of sheet plates while waiting for the stack of sheet plates in the release bay 15 (see further below) to run out.

Typically, the machine 1 comprises a feeding bay 4, however the present invention further encompasses the case in which there is no feeding bay and the feeding pallets 7 are directly driven into and out of the storing bay 6 or laid/taken directly onto/from the elevator 40 (described below). Advantageously, the feeding bay 4 is arranged near the base of the tower 2 (at a level conventionally referred to as fourth level), though outside the space occupied by the tower itself, e.g. adjacent to a side 8 of the tower 2. This side of the tower is conventionally referred to as front side 8, and the two adjacent sides as lateral sides. The feeding bay 4 is configured for housing the pallet 7. By way of example, the feeding bay 4 comprises a plurality of vertical projections 9 distributed on its plan extension, so that the top of the projections 9 defines a resting plane for the sheet plates. Advantageously, the pallet 7 has a plurality of through openings 10 with a distribution corresponding to the distribution of the aforesaid projections 9 of the feeding bay 4, for enabling the introduction thereof into the openings. It is thus possible to lower the pallet towards the bottom of the feeding bay, sliding along the projections. If the pallet 7 is loaded with sheet plates (either machined or not), these rest onto the tops of the projections and release the pallet 7 itself. Conversely, an empty pallet can be loaded with sheet plates by first lowering the empty pallet towards the bottom of the bay, laying the sheet plates to be loaded onto the projections and then lifting the pallet.

Figure 1 schematically shows an optional electrical cabin 5 for supply and control of the machine 1 (the electrical supply and control connections of the various parts of the machine 1 are not shown). Advantageously, the machine 1 comprises a release bay 15, configured for housing a single pallet 7 (not shown in the figures), arranged on a second level of the tower 2 and vertically piled up with the storing bays 6. Advantageously, the release bay 15 is at a lower vertical level than the levels occupied by the storing bays (including the first level).

In an embodiment, as shown by way of example in the figures, the release bay 15 has, typically in its upper part, a release system 16 for sheet plates, i.e. a system configured for releasing the stack of sheet plates in the release bay 15, i.e. spatially isolate one sheet plate at a time, typically the sheet plate on top of the stack, from the rest of the stack, typically by vertically lifting it up. The release system is advantageously horizontally stationary with respect to the tower 2. By way of example, the release system 16 has a fixed frame 17, typically stiffly mounted onto the tower 2, and a moving frame 18 (typically basically rectangular in plan) onto which a set of vacuum pads 19 is mounted (basically horizontally aligned). The moving frame 18 is vertically movable with respect to the fixed frame 17 (and with respect to the remaining part of the release bay 16). As an alternative (not shown), each of the aforesaid vacuum pads (or each subgroup of vacuum pads) is vertically movable independently from the other vacuum pads (or from the other subgroups), e.g. it is actuated by a dedicated piston. The vertical motion of the vacuum pads enables them to rest onto the sheet plate to be released and, once adhesion is obtained, the latter to be lifted. Advantageously, each one of the aforesaid vacuum pads is associated to a system for creating vacuum (not shown, e.g. a small tube for sucking and blowing air) for enabling the vacuum pad to adhere to the sheet plate and be released. By way of example, as shown in particular in Figure 2, the moving frame hangs, typically on the four corners, from four tie rods which on the opposite end are partially wound two by two around a pair of opposed pulleys 21, e.g. mounted onto the fixed frame 17. The pair of tie rods which is nearest the front side 8 of the tower 2 advantageously makes use of a pair of return pulleys 22. An electric motor 23, e.g. mounted onto the fixed frame 17, actuates the pair of pulleys 21, e.g. by means of one drive shaft 24.

Optionally, a vacuum pad of the aforesaid set of vacuum pads 19, typically placed on a corner of the aforesaid set, is associated to a vertical handling system 82 (partially visible in Figure 2) which is able to vertically handle the vacuum pad independently from the remaining vacuum pads (e.g. by means of a dedicated, e.g. pneumatic, cylinder-piston system) in order to lift the corner of the sheet plate which the vacuum pad adheres to for starting the release process.

In another embodiment, not shown, a release system for sheet plates, e.g. similar to the one described above, is included in the elevator 40 (see below) as an alternative to the one in the release bay 15, which is therefore without such a system.

The machine 1 can further include, typically on the release bay 15, a sheet plate measuring unit 80 for measuring the thickness of the sheet plate once it has been released in the released bay 15, and/or a magnet 81 for helping the release operation, which are not described in detail since they are known per se.

Advantageously, the machine 1 has an exit area 20 arranged on a third vertical level, vertically piled up with the storing bays 6 and the release bay 15. Advantageously, the exit area 20 is on the base 25 of the tower 2, inside the space occupied by the latter. The aforesaid third vertical level advantageously lies below the first and the second level. Typically, the base 25 of the tower 2 is apt to house a machining bench (not shown) of a working machine (not shown) or a portion (typically an end portion) of a machine for conveying sheet plates, such as e.g. a conveyor belt for sheet plates, a roller system, a trolley etc. By way of example, the aforesaid working machine is a laser cutting machine. Preferably, the machining bench comprises a plurality of rectilinear blades parallel one to the other and defining a resting plane for the single sheet plate, which during operation lies on the exit area 20. These blades advantageously develop horizontally along a direction orthogonal to the front side 8 of the tower 2. Advantageously, the blades are configured for interleaving with the prongs 63 of the comb of the elevator (see below). Optionally, the base 25 is apt to house a plurality (typically two) of the aforesaid machining benches vertically lying one above the other and vertically and/or horizontally handled, for enabling a rapid feeding of the working machine reducing dead times, as is known in the art.

Advantageously, the machine 1 has an unloading bay 30 arranged on a fifth level and configured for housing a single pallet 7 (not shown). Advantageously, the unloading bay 30 is vertically piled up with the storing bays 6, the release bay 15 and the exit area 20 inside the space occupied by the tower 2. By way of example, the storing bays 6, the release bay 15 and the unloading bay 30 include each a pair of horizontal cross-pieces 13 mutually parallel and opposed, each being typically mounted onto two uprights 12 of the same lateral side of the tower 2. By way of example, a series of rollers 14 with horizontal axis of rotation, typically with ball bearings, horizontally aligned is mounted onto each cross-piece 13 in order to support the respective pallet 7 and make it easier to drive it into/out of the respective bay.

By way of example, all the aforesaid storing 6, release 15 and unloading 30 bays are located on the front side 8 of the tower 2 (whose rear part is not occupied e.g. by the aforesaid bays, which enables to have enough space for the handling mechanisms of the lifting system and of the vacuum pad system). Advantageously, the unloading bay 30 is provided with a counter-comb 31 apt to interleave with the comb of the elevator (i.e. whose prongs are configured for interleaving with the prongs 63 of the comb of the elevator). The prongs of the counter-comb 31 are mounted e.g. onto a horizontal bar developing parallel to the front side 8 of the tower. Preferably, the counter-comb 31 is movable between a first position (not shown) in which it enables the insertion of the comb of the elevator loaded with a sheet plate into the unloading bay without interfering with the sheet plate itself, and a second position (shown in Figures 1 and 2) in which it interleaves with the comb when the latter is driven out of the unloading bay preventing the sheet plate from following the comb. Preferably, the counter-comb is movable between the first and second position by tilting or by vertical shift or by rotation or by roto-translation. In the example shown the counter-comb 31 oscillates between the first and second position by rotation around a horizontal axis parallel to the front side 8 of the tower 2, so that in the second position the prongs are vertical and in the second position oblique (or orthogonal) to the lying plane of the front side 8 of the tower. By way of example, the aforesaid horizontal bar of the counter-comb 31 is hinged to a pair of opposed arms, e.g. mounted onto the pair of opposed cross-pieces 13 of the release bay 15 lying above. Preferably, a pair of opposed linear actuators 32 (e.g. of pneumatic type), e.g. mounted onto the same opposed cross-pieces 13 of the release bay 15 lying above, push by means of a respective piston with a movement orthogonal to the front side of the tower 2 a pair of arms vertically projecting from the aforesaid cross-piece of the bar of the counter-comb 31, thus inducing the rotation of the counter-comb. By way of example, when the piston is sent back and does not act upon the counter-comb, the latter is positioned with its prongs oblique (or orthogonal) to the front side 8 (first position), with their free ends facing the outside of the tower 2. Conversely, when the piston has got out for pushing on the counter-comb (shown in Figure 2), the latter is positioned with its prongs vertical (second position). In this position the pistons of the actuators 32 contrast the thrust exerted onto the counter-comb 31 by the sheet plate when the comb of the elevator 40 gets back from the unloading bay.

Advantageously, the lifting system 3 comprises an elevator 40 vertically movable between the aforesaid first and second level and provided with a handling system 41 for the pallet 7 configured for driving the pallet out of and into the storing bay 6, respectively, temporarily supporting the pallet and driving the pallet into and out of the release bay 15, respectively.

Typically, the elevator 40 comprises a main body 42, including e.g. a pair of trolleys 43 opposed to one another and mutually stiffly connected, e.g. by means of at least one cross-piece 44 being part of the main body. Advantageously, each trolley 43 slides vertically along a respective vertical guide 45 of the machine 1, these vertical guides 45 being e.g. associated to the two uprights 12 arranged on the front side 8 of the tower 2. By way of example, each trolley comprises a pair of rollers 46 housed inside the aforesaid respective vertical guide 45, in the form of a vertical groove. Advantageously, the main body 42 comprises a pair of arms 47 opposed to one another and mutually parallel, each of them being mounted to a respective trolley 43. The arms 47 develop horizontally projecting from the front side 8 of the tower and orthogonal to the latter. Advantageously, the feeding bay 4 is arranged under the main body 42 of the elevator 40. Advantageously, the aforesaid elevator 40 is vertically movable between the first, second, third, fourth and fifth level.

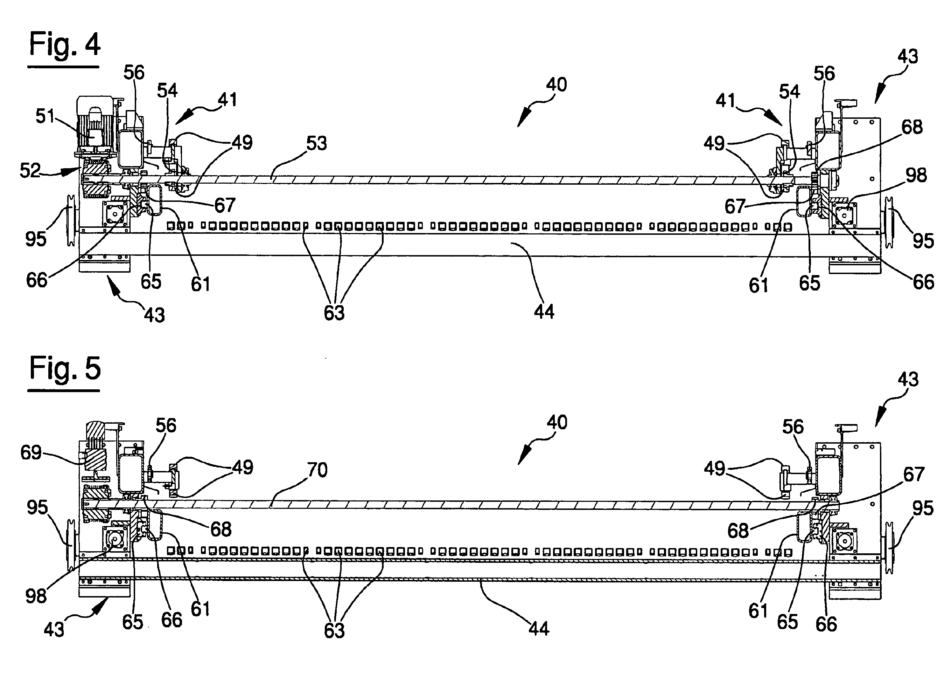

The handling system 41 for the pallet comprises e.g. a chain dragging system 48, typically including a pair of chains or belts 49, e.g. one for each arm 47, each provided by way of example with a dedicated catch 50 configured for engaging with a corresponding hook 11 of the pallet 7 so as to drive the pallet out of and into the storing 6 or release 15 or unloading bay 30, where present, respectively, as a result of the rotation of the chain. The chain dragging system 48 advantageously comprises a motor 51 mounted onto one arm 47 of the elevator 40, which by means of a coupling system (which can include a pinion or worm engaged with a toothed wheel - shown in Figure 4 - or a bevel gear) rotates a drive shaft 53 onto which is mounted a pair of toothed wheels 54 engaged with the chain 49 for moving the latter. The chain dragging system 48 optionally includes a series of further free toothed wheels 55 for each arm 47, e.g. mounted onto an arm mounted in its turn onto the respective arm 47, in order to support and keep the respective chain 49 tensioned and enable the rotation thereof.

The handling system 41 for the pallet advantageously comprises a system 58 for temporarily supporting the pallet, including e.g. two opposed series of rollers 56 aligned horizontally along the two arms of the elevator 47, respectively, for temporarily supporting the pallet on the elevator, once it has been driven out of the respective bay.

Advantageously, the elevator 40 is vertically movable at least between the aforesaid second and third level and comprises a handling system 60 for sheet plates configured for driving one sheet plate at a time out of the release bay 15, temporarily supporting the aforesaid single sheet plate and inserting it over the exit area 20. Advantageously, the elevator 40 is vertically movable at least between the aforesaid second, third and fifth level and the handling system 60 for sheet plates is configured for driving a sheet plate out of the exit area 20, temporarily supporting the aforesaid sheet plate and driving it into the unloading bay 30.

The aforesaid handling systems for the pallet 41 and the sheet plate 60 are both integrated into the elevator 40 (and are handled vertically in unison with one another and with the elevator), typically remaining distinct one from the other. All the operations involving driving in/out and vertically conveying the pallet as well as driving in/out and vertically conveying the sheet plate are carried out on the front side 8 of the machine 1 only, leaving the opposed side free.

In an embodiment not shown in the figures, the aforesaid handling system 60 for a sheet plate comprises a horizontal set of vacuum pads movable horizontally with respect to the main body 42 of the elevator 40 and orthogonally to the front side 8. For instance, the set of vacuum pads can be mounted onto a frame integrally coupled with a pair of moving arms 61 (one for each arm 47 of the elevator 40), which stiffly slide with respect to the main body of the elevator (e.g. with respect to the aforesaid arms 47 of the elevator 40 and parallel to the latter or orthogonally to the front side 8). The aforesaid plurality of vacuum pads can include an angular vacuum pad vertically movable independently from the other ones for starting the release system, as described above referring to numeral 82. Advantageously, each one of the aforesaid vacuum pads is associated with a system for creating vacuum. The aforesaid embodiment is particularly advantageous if the unloading bay 30 is not present, since the machine 1 performs the functions of storing, release and feeding to the exit area 20, without unloading the sheet plate, e.g. from the exit area 20 after being machined, into the unloading bay. In this case the release bay can be without the release system 16 described above, which is replaced in its functions by the handling system 60 with vacuum pads described above. The elevator 40 can be in this case without the comb 62, as described below.

In a different embodiment, shown by way of example in the figures, the handling system 60 for a sheet plate comprises a comb 62 horizontally movable with respect to the main body 42 of the elevator. Typically, the comb 62 comprises a plurality of prongs 63 mutually parallel and mounted at an end thereof onto a cross-piece 64 of the comb, arranged parallel to the arms 47 of the elevator 40. Preferably, the cross-piece 64 is mounted at its ends onto the aforesaid pair of moving arms 61 which stiffly slide with respect to the main body of the elevator. Advantageously, the prongs 63 of the comb are apt to interleave with the projections 9 of the feeding bay 4, so that the elevator can be lowered towards the bottom of the feeding bay.

The aforesaid moving arms 61 (which are part of the handling system 60 for a sheet plate both in the case of the vacuum pad frame and of the comb) are advantageously provided each with a guide 65 developing along the longitudinal development of the respective arm 61, which guide 65 engages a respective shoe 66 (e.g. made up of a plurality of shoes 66, four in the example shown, aligned longitudinally) mounted onto the respective arm 47 of the main body of the elevator. The aforesaid moving arms 61 are advantageously provided each with a rack 67 developing along the longitudinal development of the respective arm 61. The handling system 60 for a sheet plate preferably comprises one motor 69, typically mounted onto an arm 47 of the main body of the elevator, which actuates, e.g. by means of one drive shaft 70, a pair of toothed wheels 68, each of them engaged onto a respective rack 67. Advantageously, the lifting system 3 comprises an actuating motor 90, typically mounted onto the tower 2, e.g. on the upper part thereof, for enabling the vertical movement of the elevator 40, e.g. by means of a drive shaft 91 onto whose ends are mounted two pulleys 92 around which is partially wound, on a respective first end thereof, a pair of cables 93. Each of the cables 93, by means of a return pulley 94, engages a respective pulley 95 mounted onto a respective trolley 43 of the elevator. The second end of each cable 93 is typically fastened to the tower 2 for supporting the weight of the elevator 40.

Optionally, the machine 1 comprises an emergency blocking system for the elevator 40, comprising a pneumatic cylinder piston 98 on each trolley 43 of the elevator, which in case of emergency gets out and engages a corresponding seat of a respective plurality of seats 99 arranged along a respective upright 12 of the front side 8 of the tower 2.

Preferably, the fourth level of the feeding bay is at a lower vertical height than the other levels, typically on ground level. Advantageously, the first level is a higher vertical height than the second and/or third and/or fourth and/or fifth level. Advantageously though not necessarily, the fifth level is below the second level. Advantageously, the third level is below the second and/or fifth level.

During operation, the machine works according to the method for handling sheet plates described above in its various aspects and/or as claimed below.

## Claims

1. A machine (1) for handling sheet plates comprising at least one storing bay (6) for sheet plates arranged on a first level, a release bay (15) arranged on a second level, an exit area (20) arranged on a third level, wherein each of the aforesaid bays is configured for housing a pallet (7) for sheet plates, and a lifting system (3) comprising an elevator (40) movable vertically at least between the aforesaid first and second level and provided with a handling system (41) for said pallet configured for driving the pallet out of and into the storing bay, respectively, supporting the pallet and driving the pallet into and out of the release bay, respectively, wherein said elevator (40) is vertically movable at least between the aforesaid second and third level and comprises a handling system (60) for sheet plates, said handling systems for the pallet (41) and for the sheet plate (60) being both integrated into the aforesaid elevator (40), **characterized in that** the storing bay (6), the release bay (15) and the exit area (20) are vertically piled up and **in that** the handling system (60) for sheet plates is configured for driving one sheet plate at a time out of the release bay (15), supporting said one sheet plate and driving it into the exit area (20).

2. The machine (1) according to claim 1, further comprising a feeding bay (4) arranged on a fourth level and configured for housing the pallet (7), said elevator (40) being vertically movable between the first and fourth level, wherein the feeding bay (4) is arranged under said elevator in correspondence of a front side (8) of the machine (1).

3. The machine (1) according to any one of the claims 1 to 2, wherein said elevator (40) comprises a main body (42) including a pair of trolleys (43) opposed to one another and mutually stiffly connected by means of at least one cross-piece (44), each trolley being apt to slide along a respective vertical guide (45) of the machine (1), wherein the main body (42) further includes a pair of arms (47) opposed to one another and mutually parallel, each being integral with a respective trolley.

4. The machine (1) according to any one of the preceding claims, wherein said handling system (41) for the pallet comprises a pair of chains moved by a motor (51) mounted onto the elevator, each chain being provided with a catch (50) configured for getting engaged with a hook (11) of the pallet in order to drive the pallet out of and into the stocking or release bay, respectively.

5. The machine (1) according to any one of the preceding claims, wherein said handling system (60) for a sheet plate comprises a pair of moving arms (61) associated to a pair of fixed arms (47), opposed to one another and mutually parallel, of a main body (42) of the elevator, each moving arm being configured for stiffly sliding with respect to the corresponding fixed arm (47) of the elevator along a horizontal direction.

6. The machine (1) according to the preceding claim, wherein the handling system (60) for a sheet plate further comprises a comb (62) stiffly mounted onto said moving arms (61), the comb comprising a plurality of prongs (63) parallel to one another.

7. The machine (1) according to the preceding claim, wherein a feeding bay (4) of the machine (1) comprises a plurality of vertical projections (9) with a plan distribution corresponding to the distribution of a plurality of through openings (10) in said pallet (7), and wherein the prongs (63) of the comb are apt to interleave with said plurality of projections (9) of the feeding bay (4).

8. The machine (1) according to claim 6 or 7, further comprising an unloading bay (30) arranged on a fifth level and configured for housing the pallet, the unloading bay being vertically piled up with the storing bay, the release bay and the exit area, wherein the unloading bay is provided with a counter-comb (31) apt to interleave with said comb of the elevator and movable between a first position in which it is apt to enable the insertion of the comb of the elevator loaded with a sheet plate into the unloading bay without interfering with the sheet plate itself, and a second position in which it is apt to interleave with the comb when the latter is driven out of the unloading bay for contrasting the sheet plate and preventing it from following the comb getting back.

9. A method for handling sheet plates comprising the performance, by the machine (1) for handling sheet plates according to any one of the preceding claims, of the following operations: the elevator is positioned on the first level; the handling system for the pallet drives the pallet loaded with a stack of sheet plates out of the stocking bay, temporarily supports the pallet while the elevator moves vertically from the first to the second level and, once the second level is reached, drives the pallet into the release bay; then the handling system for the sheet plate drives the upper sheet plate of the stack out of the release bay, temporarily supports the sheet plate while the elevator moves vertically from the second to the third level, and inserts the sheet plate over the exit area.

10. The method according to the preceding claim, further comprising the following operations: the elevator is lowered towards the bottom of the feeding bay with an empty pallet supported by the handling system for the pallet, the comb interleaving with the projections, until the pallet itself is under the top of the projections, after that a stack of sheet plates is laid onto the top of the projections, then the elevator is lifted for lifting the pallet by means of the handling system for the pallet and taking it to the first level; and then the pallet is driven into the stocking bay.

## Patentansprüche

1. Vorrichtung (1) zur Handhabung von Blechen, umfassend mindestens ein Magazin (6) für Bleche, angeordnet auf einer ersten Ebene, eine Freigabestation (15), angeordnet auf einer zweiten Ebene, einen Austrittsbereich (20), angeordnet auf einer dritten Ebene, wobei jede der genannten Stationen ausgestaltet ist, um eine Palette (7) für Bleche aufzunehmen, und ein Hebesystem (3), umfassend einen Heber (40), vertikal verfahrbar mindestens zwischen der ersten und zweiten Ebene und ausgestattet mit einem Handhabungssystem (41) für die Palette, ausgestaltet für das Fahren der Palette jeweils aus dem und in das Magazin, wobei die Palette abgestützt und die Palette jeweils in die und aus der Freigabestation gefahren wird, wobei der Heber (40) vertikal verfahrbar zumindest zwischen der zweiten und dritten Ebene ist und ein Handhabungssystem (60) für Bleche umfasst, wobei die Handhabungssysteme für die Palette (41) und für das Blech (60) beide im Heber (40) integriert sind, **dadurch gekennzeichnet, dass** das Magazin (60), die Freigabestation (15) und der Austrittsbereich (20) vertikal aufgestapelt sind und dass das Handhabungssystem (60) für Bleche so ausgestaltet ist, um ein Blech zu einer Zeit aus der Freigabestation (15) zu fahren und dieses eine Blech zu stützen und in den Austrittsbereich (20) zu fahren.

2. Vorrichtung (1) nach Anspruch 1, zudem umfassend eine Zuführstation (4), angeordnet auf einer vierten Ebene und ausgestaltet zur Aufnahme der Palette (7), wobei der Heber (40) vertikal zwischen der ersten und der vierten Ebene verfahrbar ist und die Zuführstation (4) unter dem Heber an einer Frontseite (8) der Vorrichtung (1) angeordnet ist.

3. Vorrichtung (1) nach einem der Ansprüche 1 und 2, wobei der Heber (40) einen Hauptkörper (42) umfasst, einschließend ein Paar Wagen (43), die gegenständig angeordnet und steif miteinander verbunden sind mittels mindestens eines Kreuzstücks (44), wobei jeder Wagen dazu geeignet ist, auf einer entsprechenden vertikalen Führung (45) der Vorrichtung (1) zu verfahren, wobei der Hauptkörper (42) zudem ein Paar Arme (47) einschließt, die gegenständig und parallel angeordnet und jeweils fest mit einem jeweiligen Wagen verbunden sind.

4. Vorrichtung (1) nach einem der vorhergehenden Ansprüche, wobei das Handhabungssystem (41) für die Palette ein Paar Ketten umfasst, die von einem Motor (51) bewegt werden, der auf dem Heber montiert ist und jede Kette mit einer Arretierung (50) versehen ist, ausgelegt, um in einen Haken (11) der Palette einzugreifen, um die Palette jeweils aus dem/der und in das/die Magazin oder Freigabestation zu fahren.

5. Vorrichtung (1) nach einem der vorhergehenden Ansprüche, wobei das Handhabungssystem (60) für ein Blech ein Paar beweglicher Arme (61) umfasst, die mit einem Paar fester Arme (47), gegenständig und gegenseitig parallel angeordnet, eines Hauptkörpers (42) des Hebers verbunden sind, wobei jeder bewegliche Arm ausgestaltet ist, um steif zum entsprechenden festen Arm (47) des Hebers entlang einer horizontalen Richtung zu verfahren.

6. Vorrichtung (1) nach dem vorherigen Anspruch, wobei das Handhabungssystem (60) für ein Blech zudem einen Kamm (62) umfasst, steif montiert an den beweglichen Armen (61), wobei der Kamm mehrere Zinken (63) umfasst, die parallel zueinander angeordnet sind.

7. Vorrichtung (1) nach den vorhergehenden Ansprüchen, wobei eine Zuführstation (4) der Maschine mehrere vertikale Vorsprünge (9) mit einer Planverteilung entsprechend der Verteilung mehrerer Durchgangsöffnungen (10) in der Palette (7) umfasst und wobei die Zinken (63) des Kamms geeignet sind, um mit den mehreren Vorsprüngen (9) der Zuführstation (4) in Eingriff zu gelangen.

8. Vorrichtung (1) nach Anspruch 6 oder 7, zudem umfassend eine Abladestation (30), angeordnet auf einer fünften Ebene und ausgestaltet für die Aufnahme der Palette, wobei die Abladestation vertikal mit dem Magazin, der Freigabestation und dem Austrittsbereich gestapelt ist, wobei die Abladestation mit einem Gegenkamm (31) versehen ist, geeignet um mit dem Kamm des Hebers in Eingriff zu gelangen und bewegbar zwischen einer ersten Position, in der er geeignet ist, das Einfügen des Kamms des Hebers, geladen mit einem Blech, in die Abladestation zu ermöglichen, ohne mit dem Blech zu interferieren, und einer zweiten Position, in der er geeignet ist, mit dem Kamm in Eingriff zu gelangen, wenn dieser aus der Abladestation herausgefahren wird, um dem Blech entgegenzuwirken und es daran zu hindern, dem zurückfahrenden Kamm zu folgen.

9. Verfahren zur Handhabung von Blechen, umfassend die Durchführung durch die Vorrichtung (1) zur Handhabung von Blechen gemäß einem beliebigen der vorhergehenden Ansprüche der folgenden Vorgänge: Der Heber wird auf der ersten Ebene positioniert; das Handhabungssystem für die Palette fährt die mit einem Blechstapel beladene Palette aus dem Magazin, stützt die Palette vorübergehend, während der Heber vertikal von der ersten zur zweiten Ebene verfährt und fährt die Palette, sobald die zweite Ebene erreicht ist, in die Freigabestation; das Handhabungssystem für das Blech fährt dann das oberste Blech des Stapels aus der Freigabestation und stützt das Blech vorübergehend, während der Heber vertikal von der zweiten zur dritten Ebene fährt, und führt das Blech über den Austrittsbereich ein.

10. Verfahren nach dem vorhergehenden Anspruch, zudem umfassend die folgenden Vorgänge: Der Heber wird zur Unterseite der Zuführstation nach unten gefahren mit einer leeren Palette, gestützt vom Handhabungssystem für die Palette, wobei der Kamm mit den Vorsprüngen in Eingriff gelangt, bis sich die Palette unter der Oberseite der Vorsprünge befindet, wonach ein Blechstapel auf der Oberseite der Vorsprünge abgelegt wird, dann wird der Heber zum Anheben der Palette mittels des Handhabungssystems für die Palette nach oben gefahren und fährt diese zur ersten Ebene; anschließend wird die Palette in das Magazin gefahren.

## Revendications

1. Dispositif (1) pour la manutention de plaques comprenant au moins une travée de stockage (6) pour des plaques disposée sur un premier niveau, une travée de dégagement (15) disposée sur un second niveau, une zone de sortie (20) disposée sur un troisième niveau, dans lequel chacune des susdites travées est configurée pour loger une palette (7) pour les plaques, et un système de levage (3) comprenant un élévateur (40) mobile verticalement au moins entre les susdits premier et second niveaux et pourvu d'un système de manutention (41) pour ladite palette configuré pour, respectivement, expulser et introduire la palette de et dans la travée de stockage, respectivement soutenant la palette et introduisant ou expulsant celle-ci dans et de la travée de dégagement, dans lequel ledit élévateur (40) est mobile verticalement au moins entre les susdits second et troisième niveaux et comprend un système de manutention (60) pour les plaques, lesdits systèmes de manutention pour la palette (41) et pour la plaque (60) étant tous deux intégrés au susdit élévateur (40), **caractérisé en ce que** la travée de stockage (6), la travée de dégagement (15) et la zone de sortie (20) sont empilées verticalement et **en ce que** le système de manutention (60) pour les plaques est configuré pour entraîner une plaque à la fois hors de la travée de dégagement (15), soutenant ladite une plaque et l'entraînant vers la zone de sortie (20).

2. Dispositif (1) selon la revendication 1, comprenant de plus une travée d'alimentation (4) disposée sur un quatrième niveau et configurée pour loger la palette (7), ledit élévateur (40) étant mobile verticalement entre le premier et le quatrième niveau, dans lequel la travée d'alimentation (4) est disposée sous ledit élévateur en correspondance avec un côté frontal (8) du dispositif (1).

3. Dispositif (1) selon l'une quelconque des revendications de 1 à 2, dans lequel ledit élévateur (40) comprend un corps principal (42) incluant une paire de chariots (43) opposés l'un à l'autre et mutuellement reliés de façon rigide à l'aide d'au moins une traverse (44), chaque chariot étant apte à glisser le long d'un guide vertical correspondant (45) du dispositif (1), dans lequel le corps principal (42) inclut de plus une paire de bras (47) opposés l'un à l'autre et mutuellement parallèles, chacun étant solidaire de son chariot respectif.

4. Dispositif (1) selon l'une quelconque des revendications précédentes, dans lequel ledit système de manutention (41) pour la palette comprend une paire de chaînes entraînées par un moteur (51) monté sur l'élévateur, chaque chaîne étant pourvue d'un cliquet (50) configuré pour être engagé avec un crochet (11) de la palette afin de, respectivement, expulser et introduire la palette de et dans la travée de stockage ou de dégagement.

5. Dispositif (1) selon l'une quelconque des revendications précédentes, dans lequel ledit système de manutention (60) pour la plaque comprend une paire de bras mobiles (61) associés à une paire de bras fixes (47), opposés les uns aux autres et mutuellement parallèles, d'un corps principal (42) de l'élévateur, chaque bras mobile étant configuré pour glisser de façon rigide par rapport au bras fixe correspondant (47) de l'élévateur le long d'une direction horizontale.

6. Dispositif (1) selon la revendication précédente, dans lequel le système de manutention (60) pour la plaque comprend de plus un peigne (62) monté de façon rigide sur lesdits bras mobiles (61), le peigne comprenant une pluralité de dents (63) parallèles les unes aux autres.

7. Dispositif (1) selon la revendication précédente, dans lequel une travée d'alimentation (4) du dispositif (1) comprend une pluralité de saillies verticales (9) avec une distribution plane correspondant à la distribution d'une pluralité d'ouvertures de passage (10) dans ladite palette (7), et dans lequel les dents (63) du peigne sont aptes à s'imbriquer avec ladite pluralité de saillies (9) de la travée d'alimentation (4).

8. Dispositif (1) selon les revendications 6 ou 7, comprenant de plus une travée de déchargement (30) disposée sur le cinquième niveau et configurée pour loger la palette, la travée de déchargement étant empilée verticalement sur la travée de stockage, la travée de dégagement et la zone de sortie, dans lequel la travée de déchargement est pourvue d'un contre-peigne (31) apte à s'imbriquer dans le peigne de l'élévateur et mobile entre une première position, dans laquelle il est apte à activer l'insertion du peigne de l'élévateur chargé d'une plaque dans la travée de déchargement sans interférer avec la plaque elle-même, et une seconde position dans laquelle il est apte à s'imbriquer dans le peigne lorsque ce dernier est expulsé de la travée de déchargement pour s'opposer à la plaque et l'empêcher de suivre le peigne revenant en arrière.

9. Procédé pour la manutention de plaques comprenant la réalisation, par le dispositif (1) pour la manutention de plaques selon l'une quelconque des revendications précédentes, des opérations suivantes : l'élévateur est positionné sur le premier niveau ; le système de manutention pour la palette entraîne la palette chargée d'une pile de plaques hors de la travée de stockage, supportant temporairement la palette pendant que l'élévateur se déplace verticalement du premier au second niveau et, après avoir atteint le second niveau, entraîne la palette dans la travée de dégagement; ensuite le système de manutention pour les plaques entraîne la plaque supérieure de la pile hors de la travée de dégagement, supportant temporairement la plaque pendant que l'élévateur se déplace verticalement du second au troisième niveau et insère la plaque vers la zone de sortie.

10. Procédé selon la revendication précédente, comprenant de plus les opérations suivantes : l'élévateur est abaissé vers le bas de la travée d'alimentation avec une palette vide supportée par le système de manutention pour la palette, le peigne s'imbriquant avec les saillies jusqu'à ce que la palette elle-même se trouve en dessous du sommet des saillies ; après cette opération, une pile de plaques est posée au sommet des saillies, puis l'élévateur se soulève pour soulever la palette, par le biais du système de manutention pour la palette, et l'amener au premier niveau pour ensuite l'entraîner dans la travée de stockage.
